# EUROPEAN PATENT APPLICATION

(11) **EP 3 981 588 A1**
(43) Date of publication of application: **13.04.2022**
(21) Application number: 21201330.4
(22) Date of filing: 06.10.2021
(51) Int. Cl.: B32B 3/30, B32B 7/05, B32B 29/00, B32B 29/06, B65D 65/40, B65D 81/03

(54) **MULTI-LAYERED MATERIAL**

(30) Priority: 07.10.2020 GB 202015904
(71) Applicant: Maxpack Enterprises Ltd, Shrewsbury, Shropshire SY3 5HJ (GB); Maxpack Products Ltd, Shrewsbury, Shropshire SY3 5HJ (GB)
(72) Inventor: MAXIM, Russ, Shrewsbury, SY4 1HL (GB); MAXIM, Steve, Shrewsbury, SY5 9LG (GB)
(74) Representative: Wynne-Jones IP Limited

(57) **Abstract**

A multi-layered material for use as a packing material is disclosed. The multi-layered material comprises at least one substrate layer comprising paper and at least one further layer comprising paper. The further layer is shaped to provide a pattern of raised and depressed sections, and the further layer is bonded to the substrate layer at a plurality of predetermined regions to define a plurality of closed air pockets between the substrate layer and the further layer.

## Description

### Background

It is well known to use packing materials to protect fragile items for storage or while in transit. Examples of such packing materials include bubble wrap and packing paper.

Bubble wrap generally comprises two sheets of pliable plastics material, which is often polythene, one of which is flat and the other or which is shaped. The two sheets are bonded together so that air bubbles or cells are formed between the flat sheet and the shaped sheet. One of the main advantages of bubbles wrap is the cushioning that it provides for fragile items; the bubble wrap can be manufactured with air bubbles of various sizes and sheets with various thicknesses according to the required level of protection and durability.

Known packing papers may provide a sustainable alternative to bubble wrap as they are generally made from recyclable, recycled and/or biodegradable material. There are many different types of packing paper, including paper made from heavy brown recycled paper or recycled straw, which in some cases may be embossed to provide additional cushioning for fragile items; however, the level of cushioning provided by such papers is low and inferior to that of bubble wrap.

It is an aim of the current invention to avoid the known disadvantages of known packing materials by providing a biodegradable packing material comprising cushioning bubbles or cells.

### Summary

According to the invention there is a provided a multi-layered material for use as a packing material, the multi-layered material comprising:
at least one substrate layer comprising paper; and
at least one further layer comprising paper,
the further layer being shaped to provide a pattern of raised and depressed sections, and the further layer being bonded to the substrate layer at a plurality of predetermined regions to define a plurality of closed air pockets between the substrate layer and the further layer.

The at least one further layer comprises a continuous sheet of paper, and the at least one substrate layer may comprise a continuous sheet of paper.

The pattern of raised and depressed sections of the at least one further layer may comprise hemi-spherical formations, and the further layer may be embossed to provide the pattern of raised and depressed sections.

The at least one substrate layer may be substantially smooth, or may be shaped to provide a pattern of raised and depressed sections. The pattern of raised and depressed sections of the at least one substrate layer may comprise hemi-spherical formations, and the at least one substrate layer may be embossed to provide the pattern of raised and depressed sections.

The multi-layered material may comprise at least one additional layer, which may comprise paper. The at least one additional layer may be smooth or may be shaped to provide a pattern of raised and depressed sections. The pattern of raised and depressed sections of the at least one additional layer may comprise hemi-spherical formations.

The at least one additional layer may be embossed to provide the pattern of raised and depressed sections on the at least one additional layer. The at least one additional layer may be bonded to the surface of the substrate layer that is not bonded to the further layer, the bonding being at plurality of predetermined regions to define a plurality of closed air pockets between the substrate layer and the additional layer.

The additional layer may be bonded to the surface of the further layer that is not bonded to the substrate layer, the bonding being at a plurality of predetermined regions to define a plurality of closed air pockets between the further layer and the additional layer.

The multi-layered material may comprise biodegradable material.

### Brief description of drawings

The invention may be performed in various ways and embodiments thereof will now be described, by way of example only, reference being made to the accompanying drawings, in which:
Figure 1 shows a top view of a sheet of a multi-layer material for use as a packing material according to an embodiment of the invention with the substrate layer partly removed to illustrate the further layer.
Figure 2 shows cross section of the multi-layer material of Figure 1.

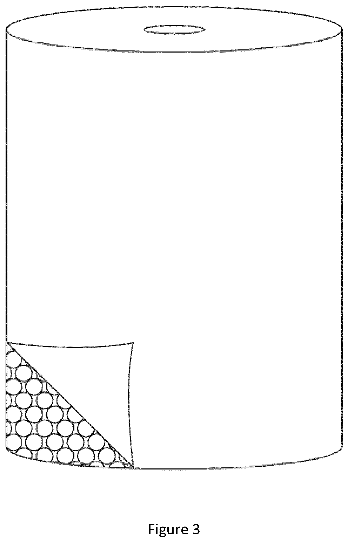

Figure 3 shows a roll configuration of a multi-layer material of Figure 1, with the substrate partly removed to illustrate the further layer.

### Detailed description

The following description illustrates the invention with reference to a packing material, but the skilled reader will appreciate that the multi-layer material may have various application, for example as a sound or heat-insulating material.

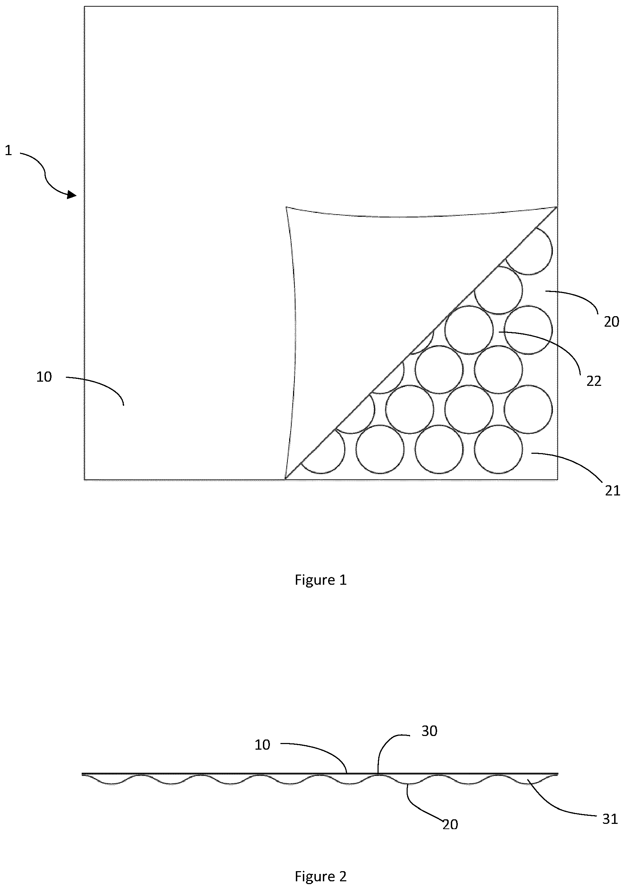

With reference to Figures 1 and 2, there is illustrated a sheet of packing material 1 according to an embodiment of the present invention. The sheet 1 comprises two layers: a substrate layer 10 and a further layer 20.

In the illustrated embodiment, the substate layer 10 comprises a first surface which is bonded to the further layer 20 and second surface which is on the opposite side of the substrate layer 10 to the first surface. In the embodiment illustrated in the Figures, the first surface and the second surface of the substrate layer are substantially smooth.

The further layer 20 comprises a first surface which is bonded to the substrate layer 10 and a second surface which is on the opposite side of the further layer 20 to the first surface. When viewed from the first surface of the further layer 20, before the substrate layer 10 and further layer 20 are bonded together, it can be seen that the further layer 20 of the illustrated embodiment is shaped to comprise a series of substantially hemi-spherical depressions 21. A view of the first surface of the further layer is shown in Figure 1, and a cross-section of the further layer 20 (bonded to the substrate layer 10) is shown in Figure 2.

In the illustrated embodiment, the further layer 20 is embossed to create the hemi-spherical depressions, but it is envisaged that other processes may be used to achieve the desired shaping of the further layer 20. For example, the paper may be shaped during manufacture to provide the desired shape and texture of the further layer.

The substrate layer 10 and the further layer 20 are bonded together at predetermined points 30 which, in the illustrated embodiment, are determined by the portions 22 of the first surface located between the depressions 21, these portions being raised in profile compared to the hemi-spherical depressions 21, as illustrated in Figure 2. The bonding of the substrate layer 10 to the further layer 20 creates air pockets or cells between the two layers. While the depressions 21 of the illustrated embodiment are hemi-spherical in shape, it is envisaged that any suitable shape and/or arrangement of raised and/or depressed portions may be used which provides air pockets between the substrate layer 10 and the further layer 20.

The material used for the substrate layer 10 and the further layer 20 may be any suitable paper that performs the required functions of each layer, and is preferably biodegradable. The further layer 20 may be formed from any paper with a suitable strength, weight and rigidity to maintain air pockets or cells between the substrate layer 10 and the further layer 20 when they are bonded together. In the illustrated embodiment, the further layer 20 comprises a heavier paper (i.e. it has a higher gsm (g/m2)) compared to the substrate layer; specifically, the further layer comprises a paper which is 40 g/m² while the substrate layer is 30 g/m². Alternatively, the substrate layer and the further layer may be made from paper of the same type and/or weight.

The paper used to form the packing material may comprise wet-strength paper; such papers resist disintegration and rupture when saturated with water. A paper may be classified as wet-strength paper if the ratio of the paper's wet tensile strength to its dry tensile strength is within a predetermined range; the criterion may be that the wet strength is at least 10% or 15% of its dry strength, depending on the classification used. Such papers may comprise wet-strength additives or agents such as polymer resins, for example as poly (aminoamide)-epicholorohydrin (PAE), biopolymers, carboxy methylcellulose (CMC), starch and any other recognised wet strength additives or agents. The cellulose fibres forming the paper may be derived from any suitable source, including wood, bamboo and textiles. In an example embodiment, the substrate layer may comprise MG Mondi 30 g/m² paper (manufactured by Mondi Štětí a.s.) and the further layer may comprise Starkraft 40g/m² paper (manufactured by Zelstoff Pols). However, the invention is not intended to be limited to these papers.

The first layer and second layer may be bonded together using any suitable means. In the illustrated embodiment, an adhesive, such as iTR (RTM) 50/2500 Paprocki adhesive is used to bond together the first layer and the further layer. It is envisaged that any suitable bonding method could be used. Figure 2 shows a cross section of an embodiment of the invention shown in Figure 1, and shows the substrate layer 10 bonded to further layer 20, specifically at predetermined points 30. In the illustrated embodiment, the hemi-spherical depressions of the further layer 20 form pockets 31 when the further layer 20 is bonded to the substrate layer 10.

The packing material can be manufactured in any size or shape and is preferably provided on rolls. The substrate layer and the further layer are generally provided as continuous sheets. The paper used for the substrate and further layers 10, 20 can be chosen based on the intended use of the packing material, and the shape and pattern of the raised and depressed portions can be varied to provide the desired level of cushioning and protection for the intended purpose.

In a further embodiment both the substrate layer and the further layer may be shaped to provide a pattern of raised and depressed sections. In yet a further embodiment, the multi-layer material may comprise a plurality of smooth layers and/or a plurality of shaped layers. For example, the multi-layer material may comprise at least one additional layer, which may comprise paper. The additional layer may be smooth or have a pattern or raised and depressed sections, which may comprise hemi-spherical formations. The layer may be embossed, and may be bonded to the surface of the substrate layer 10 that is not bonded to the further layer 20, or it may be bonded to the surface of the further layer 20 that is not bonded to the substrate layer 10.

As already stated, while the invention has been described above in relation to packing materials, it is not intended to be limited in this way. It is envisaged that the invention may have various applications, such as thermal or sound insulation.

## Claims

1. A multi-layered material for use as a packing material, the multi-layered material comprising:
at least one substrate layer comprising paper; and
at least one further layer comprising paper,
the further layer being shaped to provide a pattern of raised and depressed sections,
and the further layer being bonded to the substrate layer at a plurality of predetermined regions to define a plurality of closed air pockets between the substrate layer and the further layer.

2. A multi-layered material as claimed in claim 1 wherein the at least one further layer comprises a continuous sheet of paper.

3. A multi-layered material as claimed in any of the preceding claims wherein the at least one substrate layer comprises a continuous sheet of paper.

4. A multi-layered material as claimed in any of the preceding claims wherein the pattern of raised and depressed sections of the at least one further layer comprises hemi-spherical formations.

5. A multi-layered material as claimed in any of the preceding claims wherein the at least one substrate layer is substantially smooth.

6. A multi-layered material as claimed in any of claims 1-4 wherein the at least one substrate layer is shaped to provide a pattern of raised and depressed sections.

7. A multi-layered material as claimed in any of claim 6 wherein the pattern of raised and depressed sections of the at least one substrate layer comprises hemi-spherical formations.

8. A multi-layered material as claimed in any of the preceding claim comprising at least one additional layer.

9. A multi-layered material as claimed in claim 8 wherein the at least one additional layer comprises paper.

10. A multi-layered material as claimed in claims 8 or 9 wherein the at least one additional layer is smooth.

11. A multi-layered material as claimed in claim 8 or 9 wherein the at least one additional layer is shaped to provide a pattern of raised and depressed sections.

12. A multi-layered material as claimed in claim 11 wherein the pattern of raised and depressed sections of the at least one additional layer comprises hemi-spherical formations.

13. A multi-layered material as claimed in claims 11 or 12 wherein the at least one additional layer is embossed to provide the pattern of raised and depressed sections on the at least one additional layer.

14. A multi-layered material as claimed in any of claims 8-13 wherein the additional layer is bonded to the surface of the substrate layer that is not bonded to the further layer, the bonding being at plurality of predetermined regions to define a plurality of closed air pockets between the substrate layer and the additional layer.

15. A multi-layered material as claimed in any of claim 8-13 wherein the additional layer is bonded to the surface of the further layer that is not bonded to the substrate layer, the bonding being at a plurality of predetermined regions to define a plurality of closed air pockets between the further layer and the additional layer.
